# EUROPÄISCHE PATENTSCHRIFT

(11) **EP 3 293 404 B1**
(45) Veröffentlichungstag und Bekanntmachung des Hinweises auf die Patenterteilung: **18.03.2020**
(21) Anmeldenummer: 16188266.7
(22) Anmeldetag: 12.09.2016
(51) Int. Cl.: F16B 33/00, F16B 37/14, H01R 4/64, F16B 37/08

(54) **ANORDNUNG MIT KUNSTSTOFFKAPPE**
ASSEMBLY INCLUDING A PLASTIC CAP
SYSTEME COMPRENANT UNE PASTILLE PLASTIQUE

(43) Veröffentlichungstag der Anmeldung: 14.03.2018
(73) Patentinhaber: Newfrey LLC, New Britain, CT 06053 (US)
(72) Erfinder: Kempf, Christian, 35394 Gieben (DE); Rosemann, Frank, 35394 Gieben (DE); Brumm, Mathias, 35394 Giessen (DE)
(74) Vertreter: SBD IPAdmin

(56) Entgegenhaltungen:
- DE-A1- 2 022 907
- DE-A1- 3 033 714
- DE-A1-102012 016 244
- DE-A1-102014 009 410
- FR-A1- 2 398 913
- US-A- 3 273 441

## Beschreibung

### Gebiet der Erfindung

Die vorliegende Erfindung betrifft eine Anordnung, die einem flüssigen Medium zugeführt werden kann, mit einer Kunststoffkappe mit:
- einem Grundkörper, die eine für eine Schraube geeignete Aufnahme mit einer Öffnung aufweist, wobei der Grundkörper sich entlang einer Längsachse zwischen einer ersten und einer zweiten Portion erstreckt, wobei der Grundkörper eine äußere Oberfläche und eine innere Oberfläche aufweist, die innere Oberfläche zeigt in Richtung der Aufnahme, und
- einem konzentrisch zur Längsachse angeordneten Flansch mit einem am Flanschumfang angeordneten ersten Dichtring, wobei der Flansch am Umfang der Öffnung gegen die erste Portion vorgesehen ist, wobei der Flansch eine erste und eine zweite Oberfläche aufweist, wobei die erste Oberfläche in Richtung dem Grundkörper zeigt, wobei die zweite Oberfläche gegenüber der ersten Oberfläche angeordnet ist, und wobei der erste Dichtring von der zweiten Oberfläche vorragt.

### Hintergrund der Erfindung

Aus der DE29720454U1 ist ein kappenförmiges Abdeckelement bekannt, welches dazu dient, den Gewindeschaft eines an einer Karosserie angeschweißten Schweißbolzens zu schützen, indem dieses auf den Gewindeschaft aufgedrückt wird. Das Abdeckelement ist hohlzylindrisch mit einer Aufnahmeöffnung zur Aufnahme des Gewindeschaftes eines Gewindebolzens ausgebildet, wobei die gegenüberliegende Seite der Aufnahmeöffnung zur Bildung einer Kappenform verschlossen ist.

Bolzen, bzw. Einpressbolzen werden in der Automobilindustrie benutzt, und können mit geringem Aufwand in Blechteile eingepresst werden. Solche in Blechteile gefügte Einpressbolzen dienen bspw. bei der Herstellung von Fahrzeugkarosserien dazu, weitere Komponenten an dem Gewindebolzen zu befestigen.

Bei der Herstellung von Fahrzeugkarosserien oder Anordnungen mit solchen Gewindebolzen (oder ähnlicher Elemente) tritt das Problem auf, dass vor der Montage der weiteren Komponenten an einem solchen Gewindebolzen (oder ähnlichen Elementen) die Anordnung einem flüssigen Medium (für die Lackierung oder den Korrosionsschutz, usw.) zugeführt werden muss. Gewinde oder andere Abschnitte dieser Anordnung (bzw. dieses Gewindebolzens oder ähnlicher Elemente) sollen vor solchen flüssigen Medien geschützt werden. Fahrzeugkarosserien müssen beispielsweise einem Lackierprozess, insbesondere einem kathodischen Tauchlackierungsprozess als Korrosionsschutz unterzogen werden. Daher muss das Gewinde dieser Gewindebolzen geschützt werden, da dieses Gewinde ansonsten ebenso mit Lack beschichtet würde und daher nicht mehr funktionsfähig wäre.

Bei der Verwendung des in Dokument DE29720454U1 beschriebenen Abdeckelements zur Herstellung von Karosserien wird eine ausreichende Dichtheit zwischen dem Abdeckelement und dem den Gewindebolzen tragenden Blechteil gegenüber einem Eindringen eines flüssigen Mediums nicht automatisch sichergestellt.

Das Dokument DE102014009410A1 offenbart ein Verfahren zum Verbinden eines Einpressbolzens mit einem ein Vorloch aufweisenden Blechteil und ein Abdeckelement zur Durchführung des Verfahrens, um dieses Problem zu lösen. Das Abdeckelement dient als Matrize beim Fügen eines Einpressbolzens mit einem Blechteil, und wird gleichzeitig mit der Herstellung dieser Verbindung auf den Bolzenabschnitt des Einpressbolzens aufgedrückt. Das Abdeckelement ist öffnungsseitig mit einem radialen Flansch ausgebildet, welcher randseitig einen elastisch federnden Dichtrand aufweist. Durch diesen elastisch federnden Dichtrand wird die Dichtheit im auf den Bolzenabschnitt aufgedrückten Zustand des Abdeckelementes verbessert, das axial auf dem Blech abdichtet.

In der Praxis ist das Blech durch Planieren im Pressvorgang zum Bolzen hin gestreckt, und dichtet so zum Flansch hin ab. Da aber das Blech erst bei der Montage und dann auch nur undefiniert in die planare Lage gebracht wird und das Rückfedern nach dem Pressvorgang dies noch weiter negativ beeinflusst, kann eine totale Abdichtung nicht sichergestellt werden.

Ein weiteres kappenförmiges Abdeckelement ist aus der US 3 273 441 A bekannt.

Der vorliegenden Erfindung liegt daher die Aufgabe zugrunde, eine Anordnung mit einer Kunststoffkappe, einem Bolzen und einem Blech anzugeben, die einem flüssigen Medium zugeführt werden kann, ohne dass der Bolzen in Kontakt mit dem flüssigen Medium kommt.

### Zusammenfassung der Erfindung

Die oben genannte Aufgabe wird gelöst durch eine Anordnung mit den Merkmalen des Patentanspruchs 1.

Eine solche Anordnung umfasst eine Kunststoffkappe, die die folgenden Merkmale aufweist:
- einen Grundkörper, die eine für eine Schraube geeignete Aufnahme mit einer Öffnung aufweist, wobei der Grundkörper sich entlang einer Längsachse zwischen einer ersten und einer zweiten Portion erstreckt, wobei der Grundkörper eine äußere Oberfläche und eine innere Oberfläche aufweist, die innere Oberfläche zeigt in Richtung der Aufnahme, und
- einen konzentrisch zur Längsachse angeordneten Flansch mit einem am Flanschumfang angeordneten ersten Dichtring, wobei der Flansch am Umfang der Öffnung gegen die erste Portion vorgesehen ist, wobei der Flansch eine erste und eine zweite Oberfläche aufweist, wobei die erste Oberfläche in Richtung dem Grundkörper zeigt, wobei die zweite Oberfläche gegenüber der ersten Oberfläche angeordnet ist, und wobei der erste Dichtring von der zweiten Oberfläche vorragt, wobei der Flansch einen zweiten Dichtring aufweist, der von der zweiten Oberfläche vorragt, wobei der zweite Dichtring am Rand der Öffnung des Grundkörpers vorgesehen ist, und wobei die Kunststoffkappe einstückig ist.
Die Anordnung umfasst weiterhin einen Bolzen mit einem Schaft und einem Bolzenflansch, wobei der Schaft in der Aufnahme der Kunststoffkappe aufgenommen ist; und ein Blech mit einer Blechöffnung, wobei der Schaft in der Blechöffnung aufgenommen ist, so dass die Kunststoffkappe das Verpressen des Bleches ermöglicht, wobei das Blech eine erste Seite und eine zweite Seite aufweist. Die Anordnung ist dadurch gekennzeichnet, dass der erste Dichtring und der zweite Dichtring an der zweiten Seite des Blechs anliegen.

Die Dichtheit mit dem Blech erfolgt durch die zwei Dichtringe. Die Geometrie und die Position der zwei Dichtringe erlauben eine einfache und sichere Dichtheit ohne zusätzliche Mittel. Eine solche Anordnung erlaubt das Herstellen einer Abdichtung bei undefiniertem, auch der Dichtfläche enteilendem Blechverlauf, ohne dass Weichkomponenten notwendig werden. Das Pressen und Ebnen eines Trägerbleches ist dennoch sichergestellt.

Der zweite Dichtring, einstückig mit dem Rest der Kunststoffkappe, ist einfach herzustellen und kann ohne zusätzliche Schritte eine totale Dichtheit ermöglichen. Er ermöglicht eine gezielte Dichtheit um die Aufnahme. Die Position des zweiten Dichtrings ändert die äußere Form der Kunststoffkappe nicht, was eine einfache Integration in neue oder bereits bestehende Produktionslinien ermöglicht.

Gemäß einer weiteren bevorzugten Ausführungsform sind der zweite Dichtring und der erste Dichtring konzentrisch zueinander angeordnet. Dies ermöglicht eine Drehsymmetrie, insbesondere um die Längsachse.

In einer bevorzugten Ausführungsform ist der erste Dichtring kontinuierlich ausgebildet. Der zweite Dichtring ist auch kontinuierlich ausgebildet.

In einer weiteren bevorzugten Ausführungsform weist der zweite Dichtring eine erste Fläche und eine zweite Fläche auf, wobei die erste Fläche sich parallel zu der Längsachse erstreckt, und wobei die zweite Fläche sich schräg zu der Längsachse erstreckt. Diese Geometrie ermöglicht ein besseres Einpressen und danach eine bessere Dichtheit mit einem Blech, ohne Schlitze oder Bruchstellen auszubilden.

In einer besonders bevorzugten Ausführungsform weist der erste Dichtring eine erste Höhe entlang der Längsachse auf. Der zweite Dichtring weist eine zweite Höhe entlang der Längsachse auf. Die erste Höhe ist größer als die zweite Höhe. Dieser Höheunterschied erlaubt eine bessere Kraftaufteilung.

In einer besonders bevorzugten Ausführungsform erstreckt sich der erste Dichtring von der Längsachse radial nach außen. Die Kräfte werden während dem Einpressen besser verteilt.

In einer besonders bevorzugten Ausführungsform weist der erste Dichtring zwei konzentrische Dichtkränze auf. Die Kräfte werden während dem Einpressen besser verteilt und die Dichtheit verbessert.

In einer besonders bevorzugten Ausführungsform weist die Kunststoffkappe eine Rippe auf, die in die Aufnahme vorragt. Die Rippe ermöglicht es, eine bessere Haltekraft zu erzeugen.

In einer besonders bevorzugten Ausführungsform weist die Kunststoffkappe eine Rampe auf, die von ihrer äußere Mantelfläche vorragt. Die Rampe ermöglicht eine bessere Haltekraft zu erzeugen.

In einer besonders bevorzugten Ausführungsform ist die Aufnahme verschlossen, und der Grundkörper erstreckt sich entlang der Längsachse über die Aufnahme. Diese Erstreckung erlaubt eine verbesserte Eingreifung der Kunststoffkappe.

In einer besonders bevorzugten Ausführungsform ist das Blech ein Aluminiumblech.

In einer besonders bevorzugten Ausführungsform ist der zweite Dichtring so gegen die Oberfläche des Bleches gedrückt, dass der zweite Dichtring durch die Oberfläche des Bleches verformt ist, wobei der zweite Dichtring eine erste Fläche und eine zweite Fläche aufweist, wobei die erste Fläche in Richtung des ersten Dichtrings zeigt, und wobei die zweite Fläche gegenüber der ersten Fläche vorgesehen ist und mit der Oberfläche des Bleches in Kontakt ist.

In einer besonders bevorzugten Ausführungsform weist das Blech vor dem Einpressen des Bolzens eine Vertiefung am Blechöffnungsumfang auf. Der zweite Dichtring liegt der Vertiefung gegenüber. Der erste Dichtring liegt gegenüber eines Abschnitts des Blechs, der ohne Vertiefung oder Abbiegung ist.

Schließlich könnte die obige Aufgabe gelöst werden durch eine Kunststoffkappe mit einem Grundkörper, die eine für eine Schraube geeignete Aufnahme mit einer Öffnung aufweist, wobei der Grundkörper sich entlang einer Längsachse zwischen einer ersten und einer zweiten Portion erstreckt, wobei der Grundkörper eine äußere Oberfläche und eine innere Oberfläche aufweist, die innere Oberfläche zeigt in Richtung der Aufnahme; und einem konzentrisch zur Längsachse angeordneten Flansch mit einem am Flanschumfang angeordneten ersten Dichtring, wobei der Flansch am Umfang der Öffnung gegen die erste Portion vorgesehen ist, wobei der Flansch eine erste und eine zweite Oberfläche aufweist, wobei die erste Oberfläche in Richtung dem Grundkörperzeigt, wobei die zweite Oberfläche gegenüber der ersten Oberfläche angeordnet ist, und wobei der erste Dichtring von der zweiten Oberfläche vorragt. Die Kunststoffkappe weist eine Rippe auf, die in die Aufnahme vorragt, und eine Rampe, die von ihrer äußere Mantelfläche vorragt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie sie in den Ansprüchen definiert ist, zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine Längsschnittansicht in Richtung einer Längsachse einer Kunststoffkappe mit zwei Dichtringen einer erfindungsgemäßen Anordnung;
Fig. 2 eine perspektivische Ansicht einer Kunststoffkappe mit zwei Dichtringen einer erfindungsgemäßen Anordnung;
Fig. 3 eine Längsschnittansicht in Richtung einer Längsachse einer erfindungsgemäßen Anordnung mit der Kunststoffkappe von Fig. 2, wobei eine Schiebehülse eingedrückt ist;
Fig. 4 eine Längsschnittansicht durch eine weitere Ausführungsform einer Kunststoffkappe einer erfindungsgemäßen Anordnung;
Fig. 5 eine Längsschnittansicht durch eine weitere Ausführungsform einer Anordnung mit der in Fig. 4 dargestellten Kunststoffkappen, vor dem Einlegen am Blech der zwei Dichtringe;
Fig. 6 eine Längsschnittansicht durch eine weitere Ausführungsform einer Kunststoffkappe einer erfindungsgemäßen Anordnung;
Fig. 7 eine perspektivische Ansicht durch eine weitere Ausführungsform einer Kunststoffkappe mit einer Rampe einer erfindungsgemäßen Anordnung;
Fig. 8 eine Längsschnittansicht in Richtung einer Längsachse durch eine weitere Ausführungsform einer Kunststoffkappe mit zwei Rampen einer erfindungsgemäßen Anordnung, wobei eine Schiebehülse eingedrückt ist;
Fig. 9 eine perspektivische Ansicht durch eine weitere Ausführungsform einer Kunststoffkappe mit einer Rippe einer erfindungsgemäßen Anordnung.

### Detaillierte Beschreibung bevorzugter Ausführungsformen vorliegender Erfindung

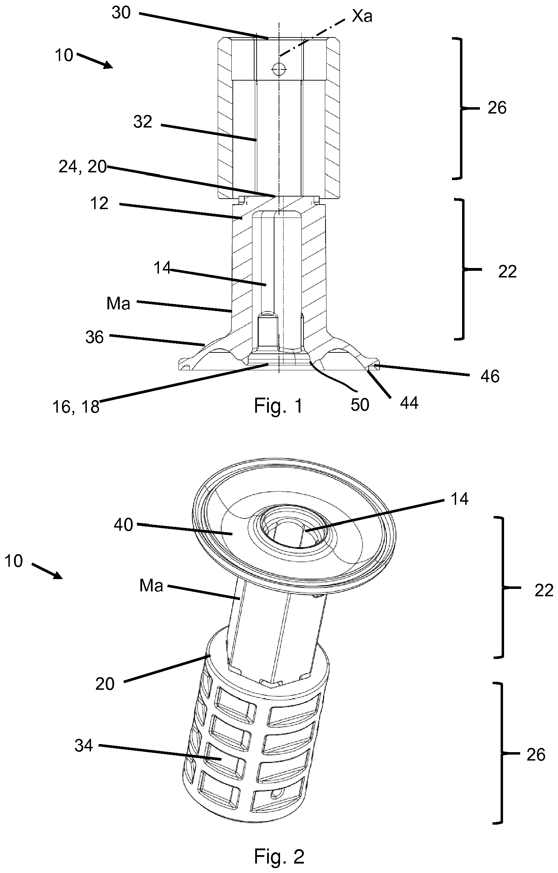

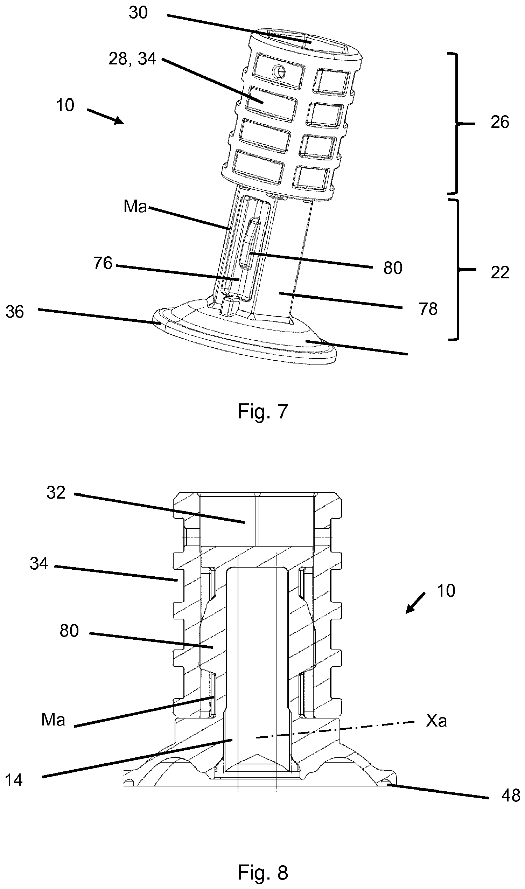

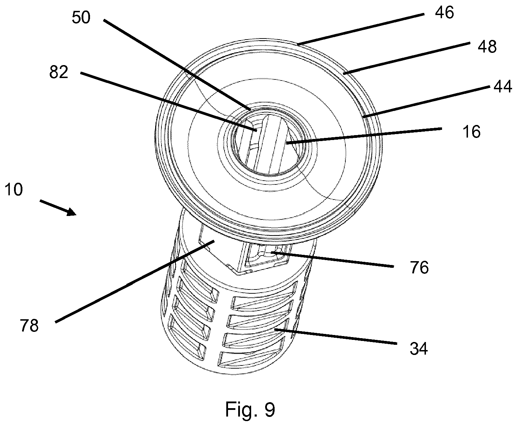

Fig. 1, Fig. 2, Fig. 4, Fig. 6, Fig. 7, Fig. 8 und Fig. 9 zeigen verschiedene Ausführungsformen einer Kunststoffkappe 10. Die Kunststoffkappe 10 ist im Wesentlichen ein kappenförmiges Abdeckelement. Die Kunststoffkappe 10 weist einen Grundkörper 12 auf. Der Grundkörper ist beispielsweise eine zylindrische Hülse. Die Zylindrische Hülse hat beispielsweise einen Querschnitt, der nicht Kreisförmig ist. Die Zylindrische Hülse hat beispielsweise einen polygonalen Querschnitt.. Der Grundkörper 12 erstreckt sich entlang eine Längsachse Xa. Der Grundkörper 12 umfasst eine Aufnahme 14. Die Aufnahme 14 kann eine Drehsymmetrie um die Längsachse Xa aufweisen. Die Aufnahme 14 weist eine Öffnung 16 auf und ist für eine Schraube geeignet. Die Aufnahme 14 erstreckt sich entlang der Längsachse Xa zwischen einer ersten Portion 18 und einer zweiten Portion 20. Die Öffnung 16 ist an der ersten Portion 18 ausgebildet. Die Aufnahme 14 hat beispielsweise einen kreisförmigen Querschnitt.

Insbesondere weist der Grundkörper 12 einen ersten Bereich 22 auf, der im Wesentlichen zylinderförmig ausgebildet ist und der die Aufnahme 14 umfasst. Der erste Bereich 22 ist durch einen Deckel 24 verschlossen. Der Deckel 24 ist an der zweiten Portion 20 ausgebildet. Die Aufnahme 14 ist durch den Deckel 24 verschlossen und bildet ein Sackloch aus. Die Aufnahme 14 ist umlaufend dicht verschlossen. Der erste Bereich 22 bildet eine Mutter aus. Die Außenfläche Fa des ersten Bereichs 22 weist beispielsweise ein Sechskantbereich auf, wie in Fig. 2, Fig. 7 und Fig. 9 dargestellt.

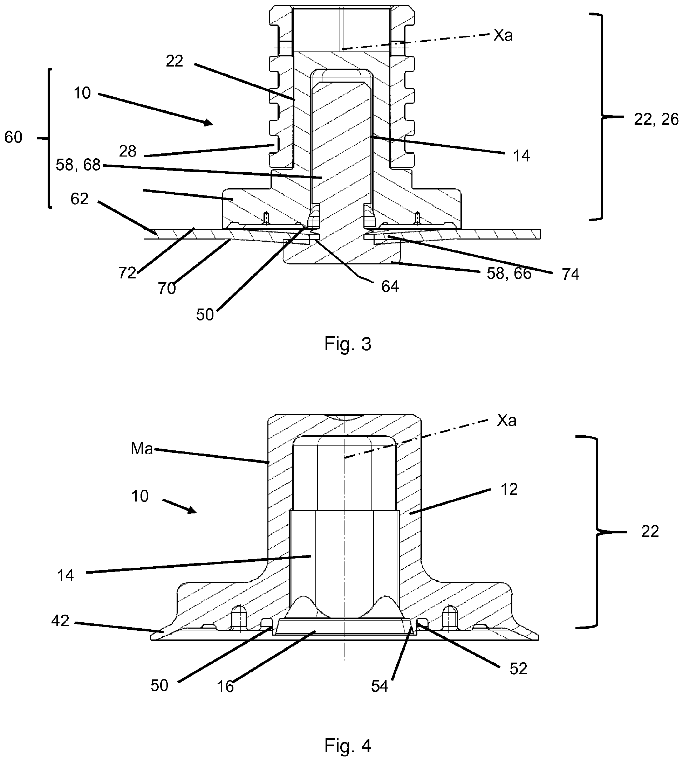

Wie bereits in Fig. 1, Fig. 2, Fig. 6, Fig. 7 und Fig. 9 dargestellt, kann an den ersten Bereich 22 ein zweiter Bereich 26 angeschlossen sein. In einer anderen Ausführungsform wie in Fig. 4 dargestellt, weist die Kunststoffkappe 10 keinen weiteren zweiten Bereich auf.

Der zweite Bereich 26 bildet eine hohlzylinderförmige Schiebehülse 28 aus. Der zweite Bereich 26 erstreckt sich entlang der Längsachse Xa zwischen der zweiten Portion 20 und einer dritten Portion 30. Die dritte Portion 30 ist geöffnet. Der zweite Bereich 26 weist eine innere Mantelfläche Mi und eine äußere Mantelfläche Ma auf. Die innere Mantelfläche Mi bildet eine zweite Aufnahme 32 aus. Die äußere Mantelfläche Ma ist vorzugsweise mit Eingriffsmerkmalen 34 ausgebildet wie bereits in Fig. 2, Fig. 3, Fig. 6, Fig. 7, Fig. 8 und Fig. 9 dargestellt. Die Eingriffsmerkmale 34 sind beispielsweise Kerben. Die Eingriffsmerkmale 34 können regelmäßig über die äußere Mantelfläche Ma verteilt sein.

Die Schiebehülse 28 ist beispielsweise trennbar angeformt. Eine Sollbruchstelle kann zwischen der Schiebehülse 28 und dem ersten Bereich vorgesehen sein. Die Schiebehülse 28 weist beispielsweise einen Innendurchmesser auf, der größer oder nahezu gleich ist, wie der Außendurchmesser des ersten Bereichs 22. Die Schiebehülse 28 kann über den ersten Bereich 22 unter dessen Pressung geschoben werden.

Öffnungsseitig ist an dieser Kunststoffkappe 10 ein radial umlaufender Flansch 36 angeformt. Der Flansch 36 ist am Umfang der Öffnung 16 gegen die erste Portion 18 vorgesehen. Der Flansch 36 ist vorzugsweise konzentrisch zur Längsachse Xa angeordnet. Der Flansch 36 weist eine erste und eine zweite Oberfläche 38, 40 auf. Die erste Oberfläche 38 zeigt in Richtung dem Grundkörper 12. Die zweite Oberfläche 40 ist gegenüber der ersten Oberfläche 38 angeordnet. Der Flansch 36 ist vorzugsweise in einer Ebene ausgestaltet, die im Wesentlichen senkrecht zu der Längsachse Xa ist. Der Flansch 36 kann bogenförmig sein. Der Flansch 36 kann eine Saugnapfform aufweisen.

Ein erster Dichtring 42 ist am Flansch 36 vorgesehen, wie in Fig. 1, Fig. 2, Fig. 3, Fig.4, Fig. 5, Fig. 6, Fig. 8 und Fig. 9 darstellt. Der erste Dichtring 42 ist am Rand des Flanschs 36 ausgebildet und erstreckt sich kontinuierlich am Flanschumfang. Der erste Dichtring 42 kann konzentrisch zur Längsachse Xa sein. Der erste Dichtring 42 ragt von der zweiten Oberfläche 40 vor. Der erste Dichtring 42 ist beispielsweise kronenförmig und erstreckt sich schräg vom Umfang des Flansches 36. Er kann sich beispielsweise in einem Winkel von ungefähr 25 Grad bis 65 Grad zur Längsachse Xa radial nach außen erstrecken. Der erste Dichtring 42 ist kontinuierlich auf dem Flansch 36 ausgebildet.

Wie bereits in Fig. 1 dargestellt kann der erste Dichtring 42 zwei konzentrische Dichtkränze 44, 46 aufweisen. Die zwei konzentrischen Dichtkränze 44, 46 sind beispielsweise durch eine Rille 48 voneinander getrennt.

Die Kunststoffkappe 10 (bzw. der Flansch 36) weist einen zweiten Dichtring 50 auf. Der zweite Dichtring 50 ragt von der zweiten Oberfläche 40 vor. Der zweite Dichtring 50 ist am Rand der Öffnung 16 vorgesehen. Der zweite Dichtring 50 ist kontinuierlich auf dem Flansch 36 ausgebildet. Die zwei Dichtringe 42, 50 sind miteinander radial beabstandet. Der zweite Dichtring 50 bildet ein Kreis, der in den durch den ersten Dichtring 42 ausgebildeten Kreis eingeschrieben ist. Der zweite Dichtring 50 bildet eine zweite Dichtlippe aus (die erste Dichtlippe ist vorzugsweise durch den ersten Dichtring ausgebildet). Vorzugsweise sind die ersten und zweiten Dichtringe 42, 50 konzentrisch zueinander angeordnet. Die ersten und zweiten Dichtringe 42, 50 sind mehrere Millimeter voneinander beabstandet. Beispielsweise ist ein Abstand von mindestens 5 Millimetern zwischen dem ersten und zweiten Dichtring 42, 50 vorgesehen. Insbesondere ist ein Abstand von 6 bis 8,5 Millimetern zwischen dem ersten und zweiten Dichtring 42, 50 vorgesehen. Der erste Dichtring 42 weist eine erste Höhe entlang der Längsachse auf. Der zweite Dichtring weist eine zweite Höhe entlang der Längsachse auf. Vorzugsweise ist die erste Höhe größer als die zweite Höhe.

Der zweite Dichtring 50 weist eine erste Fläche 52 und eine zweite Fläche 54 auf. Die erste Fläche 52 zeigt in Richtung des ersten Dichtrings 42. Die zweite Fläche 54 ist gegenüber der ersten Fläche 52 angeordnet. Die zweite Fläche 54 ist beispielsweise in der Kontinuität der inneren Mantelfläche Mi der Aufnahme 14. Eine abgerundete Schulter 56 kann zwischen der inneren Mantelfläche Mi der Aufnahme 14 und der zweiten Fläche 54 vorgesehen sein.

Wie bereits in Fig. 4 dargestellt, kann die erste Fläche 52 sich parallel zu der Längsachse Xa erstrecken. Die zweite Fläche 54 kann sich schräg zu der Längsachse Xa erstrecken.

In einer anderen Ausführungsform, und wie beispielsweise in Fig. 1 dargestellt, kann die zweite Fläche 54 sich parallel zu der Längsachse Xa erstrecken und die erste Fläche 52 kann sich schräg zu der Längsachse Xa erstrecken.

Die erste (bzw. die zweite) Fläche 52, 54 kann sich mit einem Winkel zwischen 25 Grad und 65 Grad zu der Längsachse Xa erstrecken.

Die Kunststoffkappe 10 ist einstückig. Insbesondere sind der erste Dichtring 42, der zweite Dichtring 50, der Flansch 36 und der Grundkörper 12 einstückig. Der erste Dichtring 42, der zweite Dichtring 50, der Flansch 36 und der Grundkörper sind aus dem gleichen Material hergestellt. Die Kunststoffkappe 10 ist beispielsweise durch Spritzguss hergestellt. Vorzugsweise wird die Kunststoffkappe 10 in einem einzigen Spritzgussschritt hergestellt. Die Dichtung kann so hergestellt werden ohne Weichkomponente zu benutzen. Weichkomponenten sind teuer und aufwändiger zu herstellen. Bei hohen Temperaturen können Weichkomponenten ihre Dichtigkeit verlieren.

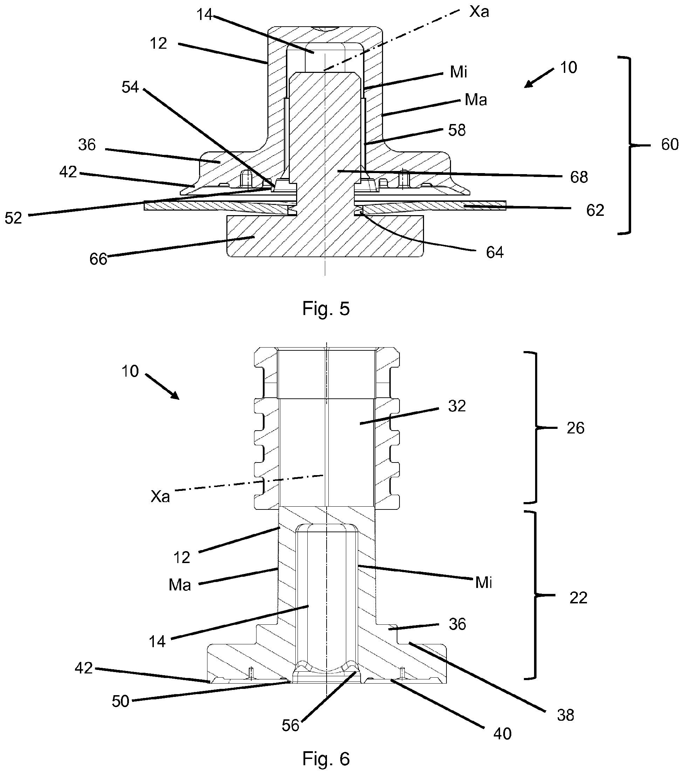

Die Kunststoffkappe 10 ist geeignet, um einen Bolzen 58 abzudecken. Wie bereits in Fig. 3 oder in Fig. 5 dargestellt, ist die Kunststoffkappe 10 ein Teil einer Anordnung 60, die einen Bolzen 58 und ein Blech 62 mit einer Blechöffnung 64 aufweist.

Der Bolzen 58 umfasst einen Kopfabschnitt 66 und einen Bolzenabschnitt 68. Der Bolzen 58 ist beispielsweise, wie bereits dargestellt, ein Einpressbolzen. Der Bolzenabschnitt 68 ist mit einem Gewinde vorgesehen. Der Bolzen 58 wird mit dem vorgelochten Blech 62 verbunden. Der Bolzen 58 ist in ein mit einer Vorprägung ausgebildetes Vorloch (die Öffnung) des Blechs eingeführt.

Das Blech 62 weist eine erste Seite 70 und eine zweite Seite 72 auf. Das Blech 62 erstreckt sich im Wesentlichen in einer Ebene. Um die Blechöffnung 64 wird das Blech 62 gebogen (siehe Fig. 3), was eine Vertiefung 74 ausbildet. Dieser Bereich bildet einen Vorprägungsbereich. Das Blech 62 ist vorzugsweise ein Aluminiumblech. Das Blech 62 kann auch ein Stahlblech sein. Das Aluminiumblech kann dünn sein. Die Stärke des Bleches 62 kann beispielsweise zwischen 1 und 3 Millimeter sein, und insbesondere zwischen 1 und 1.5 Millimeter sein.

Der Bolzen 58 ist in das Blech 62 über dessen Öffnung bis zur Anlage des Kopfabschnittes auf der ersten Seite 70 des Blechs verpresst. Gleichzeitig kann (zum Beispiel mittels eines ersten Press- und Fügestempels) über den Flansch 36 mit Prozesskraft die Kunststoffkappe 10 (und insbesondere der erste Bereich) als Matrize über den Bolzenabschnitt 68 gedrückt werden, bis zuerst der erste Dichtring 42 an der zweiten Seite 72 des Blechs 62 anliegt. Bei weiterem Pressen wird der zweite Dichtring 50an der zweiten Seite 72 des Blechs 62 anliegen. Im Wesentlichen wird die Aufnahme 14 der Kunststoffkappe 10 über den Bolzenabschnitt 68 gedrückt. Der Querschnitt der Aufnahme 14 ist so dimensioniert, dass der Bolzenabschnitt 68 in die Aufnahme 14 gedrückt werden kann, ohne das Gewinde zu beschädigen, aber um die Kunststoffkappe 10 fest zu halten. Die Kunststoffkappe 10 und der Bolzen 58 arbeiten zusammen, um das Blech 62 (bzw. die Vertiefung 74) zu ebnen.

Der zweite Dichtring 50 wird auf die Blechoberfläche angelegt und bei weiterem Pressen elastisch zur Seite ausweichen. Diese Verformung des zweiten Dichtring 50 wird die Dichtheit so verstärken, dass kein flüssiges Medium innerhalb der Aufnahme 14 eintreten kann. Der zweite Dichtring 50 kann somit die Rückfederbewegung des Blechs und das gegebenenfalls nicht voll plane Blech 62 ausgleichen und gleichzeitig die Dichtheit gewährleisten. Der zweite Dichtring 50 liegt gegenüber der Vertiefung 74. Der erste Dichtring 42 liegt gegenüber dem Blech, aber außerhalb der Vertiefung 74. Der erste Dichtring 42 liegt gegenüber einem Abschnitt des Bleches, der vor dem Einpressen schon gerade war.

Die so hergestellte Anordnung 60 (d.h. Blech 62, Bolzen 58 und Kunststoffkappe 10 über den Bolzen 58 gedrückt und auf der zweiten Seite des Blechs 62 angelegt) kann einem flüssigen Medium zugeführt werden. Wie vorher erwähnt kann dieses flüssige Medium ein Korrosionsschutzmittel sein. Das flüssige Medium ist beispielsweise ein Kathodischer Tauchlack. Die zwei Dichtringe 42, 50 ermöglichen ein totales Abdichten ohne zusätzliche Maßnahmen an der Verbindung oder an Presswerkzeugen oder aufwendige Nacharbeit.

Beim Aufdrücken der Kunststoffkappe 10 (und insbesondere des ersten Bereichs) auf den Bolzen, kann der Bolzen 58 einen Teil des Kunststoffs der Kunststoffkappe 10, der die Aufnahme 14 ausbildet, abreißen. Der Teil des Kunststoffs kann beispielsweise am Gewinde des Bolzens haften bleiben, was eine Reinigung des Bolzens erfordert.

Wie bereits beschrieben, weist der erste Bereich eine Außenfläche auf. Die Außenfläche kann einen Sechskantbereich aufweisen. In diesem Fall weist der erste Bereich sechs Wände 76, 78 auf. Eine von den Wänden kann eine flexible Wand 76 sein, und sich während dem Aufdrücken der Kunststoffkappe 10 (und insbesondere des ersten Bereichs) auf den Bolzen 58 bewegen. Im Wesentlichen können zwei gegeneinander liegende Wände, flexibel Wände76 sein. Im Vergleich zu den anderen Wänden 78 (die als "nicht flexibel" bezeichnet werden), weisen die zwei flexiblen Wände 76 eine geringere Wandstärke auf. Beispielsweisen weisen die flexiblen Wände 76 eine Wandstärke zwischen 0.5 Millimetern und 1.5 Millimetern. Die andere Wände 78 können beispielsweise eine Wandstärke zwischen 1.5 Millimetern und 2.5 Millimetern haben.

Die flexible Wand 76 weist eine innere Fläche auf, die in Richtung der Aufnahme 14 zeigt, und eine abgewandte äußere Fläche.

Eine Rampe 80 kann auf der äußeren Fläche angeordnet sein.

Die innen Fläche weist beispielsweise eine Rippe 82 auf.

Die Rampe 80 und/oder die Rippe 82 können in der Mitte der Wand angeordnet sein. Die Rippe 82 und die Rampe 80 sind beispielsweise gegenüber angeordnet. Beim Aufdrücken der Kunststoffkappe 10 drückt die Rippe (bzw. die Rippen 82) auf den Bolzenabschnitt 68. Die Rippen 82 von den zwei gegeneinander liegenden Wänden wirken zusammen, um Druck auf den Bolzenabschnitt 68 auszuüben. Im Wesentlichen werden sich die Rippen 82 beim Aufschieben der Kunststoffkappe 10 an den Bolzenabschnitt 68 herandrücken. Die Rippen 82 sind so angeordnet, dass sie eine Überschneidung mit dem Bolzen 58 aufweisen.

Die Rampe 80 kann den Druck auf den Bolzenabschnitt 68 durch die Rippe 82 verstärken.

Zum Beispiel, kann die Schiebehülse, wenn sie über den ersten Bereich unter dessen Pressung geschoben wird, auf die Rampe einen Druck erzeugen, der an die Rippen weitergeleitet wird.

Bei der beschriebenen Ausführungsform sind zwei flexible Wände vorgesehen. Aber in anderen Ausführungsformen können auch nur eine oder auch mehr als zwei flexible Wände vorgesehen sein.

Die Kunststoffkappe 10 könnte auch mit Spiel auf den Bolzen aufzudrücken sein und erst beim Herabschieben der Kunststoffkappe 10 könnte der Druck über die Rampe auf den Bolzen ausgeübt und der Festsitzt der Kunststoffkappe 10 gewährleistet werden.

Die durch die Rippen und die innere Wände gebildete Aufnahme 14 (und besonders die Aufnahmekontur) liegt innerhalb der zweiten Dichtringkontur.

Nach der Zuführung in das flüssige Medium der so geformten Anordnung wird die Kunststoffkappe 10 von dem Bolzenabschnitt abgezogen (bzw. abgeschraubt). Hierzu weist die Schiebehülse auf ihrer äußeren Umfangsfläche die Eingriffsmerkmale auf.

## Patentansprüche

1. Anordnung, die einem flüssigen Medium zugeführt werden kann, mit:
a) einer Kunststoffkappe (10) mit:
- einem Grundkörper (12), die eine für eine Schraube geeignete Aufnahme (14) mit einer Öffnung (16) aufweist, wobei der Grundkörper (12) sich entlang einer Längsachse (Xa) zwischen einer ersten und einer zweiten Portion erstreckt, wobei der Grundkörper (12) eine äußere Oberfläche und eine innere Oberfläche aufweist, die innere Oberfläche zeigt in Richtung der Aufnahme (14), und
- einem konzentrisch zur Längsachse angeordneten Flansch (36) mit einem am Flanschumfang angeordneten ersten Dichtring (42), wobei der Flansch (36)
am Umfang der Öffnung (16) gegen die erste Portion vorgesehen ist, wobei der Flansch (36) eine erste und eine zweite Oberfläche aufweist, wobei die erste Oberfläche in Richtung dem Grundkörper (12) zeigt, wobei die zweite Oberfläche gegenüber der ersten Oberfläche angeordnet ist, und wobei der erste Dichtring (42) von der zweiten Oberfläche vorragt,
wobei der Flansch einen zweiten Dichtring (50) aufweist, der von der zweiten Oberfläche vorragt, wobei der zweite Dichtring am Rand der Öffnung (16) des Grundkörpers (12) vorgesehen ist, und die Kunststoffkappe (10) einstückig ist;
b) einem Bolzen mit einem Schaft und einem Bolzenflansch, wobei der Schaft in der Aufnahme (14) der Kunststoffkappe (10) aufgenommen ist;
c) einem Blech (62) mit einer Blechöffnung (64), wobei der Schaft in der Blechöffnung (64) aufgenommen ist, so dass die Kunststoffkappe (10) das Verpressen des Bleches (62) ermöglicht, wobei das Blech (62) eine erste Seite (70) und eine zweite Seite (72) aufweist, **dadurch gekennzeichnet, dass** der erste Dichtring (42) und der zweite Dichtring (50) an der zweiten Seite (72) des Blechs (62) anliegen.

2. Anordnung nach Anspruch 1, wobei der zweite Dichtring (50) und der erste Dichtring (42) konzentrisch zueinander angeordnet sind.

3. Anordnung nach Anspruch 1 oder 2, wobei der zweite Dichtring (50) eine erste Fläche und eine zweite Fläche aufweist, wobei die erste Fläche sich parallel zu der Längsachse erstreckt, und wobei die zweite Fläche sich schräg zu der Längsachse erstreckt.

4. Anordnung nach einem der Ansprüche 1 - 3, wobei der erste Dichtring eine erste Höhe entlang der Längsachse aufweist, wobei der zweite Dichtring eine zweite Höhe entlang der Längsachse aufweist, und wobei die erste Höhe größer als die zweite Höhe ist.

5. Anordnung nach einem der Ansprüche 1 - 4, wobei der erste Dichtring (42) zwei konzentrische Dichtkränze aufweist.

6. Anordnung nach einem der Ansprüche 1 - 5, wobei eine Rippe (82) vorgesehen ist, und wobei die Rippe in die Aufnahme vorragt.

7. Anordnung nach einem der Ansprüche 1 - 6, wobei eine Rampe (80) vorgesehen ist, und wobei die Rampe von der äußeren Oberfläche des Grundkörpers (12) vorragt.

8. Anordnung nach einem der Ansprüche 1 - 7, wobei das Blech ein Aluminiumblech ist

9. Anordnung nach einem der Ansprüche 1 - 8, wobei das Blech eine Vertiefung am Blechöffnungsumfang aufweist, wobei der zweite Dichtring der Vertiefung gegenüber liegt.

## Claims

1. Assembly which can be supplied to a liquid medium, with:
a) a plastic cap (10) with:
- a basic body (12), which has a receptacle (14), suitable for a screw, with an opening (16), wherein the basic body (12) extends along a longitudinal axis (Xa) between a first and a second portion, wherein the basic body (12) has an outer surface and an inner surface, the inner surface points in the direction of the receptacle (14), and
- a flange (36), disposed concentrically to the longitudinal axis, with a first sealing ring (42) disposed on the flange circumference, wherein the flange (36) is provided on the circumference of the opening (16) against the first portion, wherein the flange (36) has a first and a second surface, wherein the first surface points in the direction of the basic body (12), wherein the second surface is disposed opposite the first surface, and wherein the first sealing ring (42) protrudes from the second surface,
wherein the flange has a second sealing ring (50) which protrudes from the second surface, wherein the second sealing ring is provided on the edge of the opening (16) of the basic body (12), and the plastic cap (10) is integral;
b) a bolt with a shaft and a bolt flange, wherein the shaft is accommodated in the receptacle (14) of the plastic cap (10);
c) a metal sheet (62) with a metal sheet opening (64), wherein the shaft is accommodated in the metal sheet opening (64) such that the plastic cap (10) facilitates the pressing of the metal sheet (62), wherein the metal sheet (62) has a first side (70) and a second side (72), **characterised in that** the first sealing ring (42) and the second sealing ring (50) abut on the second side (72) of the metal sheet (62).

2. Assembly according to claim 1, wherein the second sealing ring (50) and the first sealing ring (42) are arranged concentrically to one another.

3. Assembly according to claim 1 or 2, wherein the second sealing ring (50) has a first surface and a second surface, wherein the first surface extends parallel to the longitudinal axis, and wherein the second surface extends obliquely to the longitudinal axis.

4. Assembly according to any of claims 1-3, wherein the first sealing ring has a first height along the longitudinal axis, wherein the second sealing ring has a second height along the longitudinal axis, and wherein the first height is greater than the second height.

5. Assembly according to any of claims 1 - 4, wherein the first sealing ring (42) has two concentric sealing rims.

6. Assembly according to any of claims 1 - 5, wherein a rib (82) is provided, and wherein the rib protrudes into the receptacle.

7. Assembly according to any of claims 1 - 6, wherein a ramp (80) is provided, and wherein the ramp protrudes from the outer surface of the basic body (12).

8. Assembly according to any of claims 1 - 7, wherein the metal sheet is an aluminium sheet.

9. Assembly according to any of claims 1 - 8, wherein the metal sheet has an indentation on the metal sheet opening circumference, wherein the second sealing ring is situated opposite the indentation.

## Revendications

1. Agencement, qui peut être amené à un milieu liquide, avec :
a) un capuchon plastique (10) avec :
- un corps de base (12), qui présente un logement (14) adapté pour une vis avec une ouverture (16), dans lequel le corps de base (12) s'étend le long d'un axe longitudinal (Xa) entre une première et une deuxième portion, dans lequel le corps de base (12) présente une surface extérieure et une surface intérieure, la surface intérieure pointe en direction du logement (14), et
- un collet (36) agencé concentriquement à l'axe longitudinal avec une première bague d'étanchéité (42) agencée au niveau de la périphérie de collet, dans lequel le collet (36) est prévu au niveau de la périphérie de l'ouverture (16) contre la première portion, dans lequel le collet (36) présente une première et une deuxième surface, dans lequel la première surface pointe en direction du corps de base (12), dans lequel la deuxième surface est agencée par rapport à la première surface, et dans lequel la première bague d'étanchéité (42) fait saillie de la deuxième surface,
dans lequel le collet présente une deuxième bague d'étanchéité (50), qui fait saillie de la deuxième surface,
dans lequel la deuxième bague d'étanchéité est prévue au bord de l'ouverture (16) du corps de base (12), et le capuchon plastique (10) est d'un seul tenant ;
b) un boulon avec une tige et un collet de boulon, dans lequel la tige est reçue dans le logement (14) du capuchon plastique (10) ;
c) une tôle (62) avec une ouverture de tôle (64), dans lequel la tige est reçue dans l'ouverture de tôle (64), de sorte que le capuchon plastique (10) permet la compression de la tôle (62),
dans lequel la tôle (62) présente un premier côté (70) et un deuxième côté (72), **caractérisé en ce que** la première bague d'étanchéité (42) et la deuxième bague d'étanchéité (50) s'appliquent sur le deuxième côté (72) de la tôle (62).

2. Agencement selon la revendication 1, dans lequel la deuxième bague d'étanchéité (50) et la première bague d'étanchéité (42) sont agencées concentriquement l'un par rapport à l'autre.

3. Agencement selon la revendication 1 ou 2, dans lequel la deuxième bague d'étanchéité (50) présente une première surface et une deuxième surface, dans lequel la première surface s'étend parallèlement à l'axe longitudinal, et dans lequel la deuxième surface s'étend en biais par rapport à l'axe longitudinal.

4. Agencement selon l'une quelconque des revendications 1 - 3, dans lequel la première bague d'étanchéité présente une première hauteur le long de l'axe longitudinal, dans lequel la deuxième bague d'étanchéité présente une deuxième hauteur le long de l'axe longitudinal, et dans lequel la première hauteur est plus grande que la deuxième hauteur.

5. Agencement selon l'une quelconque des revendications 1 - 4, dans lequel la première bague d'étanchéité (42) présente deux couronnes d'étanchéité concentriques.

6. Agencement selon l'une quelconque des revendications 1 - 5, dans lequel une nervure (82) est prévue, et dans lequel la nervure fait saillie dans le logement.

7. Agencement selon l'une quelconque des revendications 1 - 6, dans lequel une rampe (80) est prévue, et dans lequel la rampe fait saillie de la surface extérieure du corps de base (12).

8. Agencement selon l'une quelconque des revendications 1 - 7, dans lequel la tôle est une tôle d'aluminium.

9. Agencement selon l'une quelconque des revendications 1 - 8, dans lequel la tôle présente un évidement au niveau de la périphérie d'ouverture de tôle, dans lequel la deuxième bague d'étanchéité fait face à l'évidement.
